# EUROPEAN PATENT APPLICATION

(11) **EP 2 879 458 A1**
(43) Date of publication of application: **03.06.2015**
(21) Application number: 14187441.2
(22) Date of filing: 02.10.2014
(51) Int. Cl.: H04W 72/04, H04W 8/00

(54) **Method and apparatus for supporting device-to-device (d2d) discovery in a wireless communication system**

(30) Priority: 04.10.2013 US 201361886850 P
(71) Applicant: Innovative Sonic Corporation, Taipei City 10049 (TW)
(72) Inventor: Kuo, Richard Lee-Chee, 10049 Taipei City (TW)
(74) Representative: Hoefer & Partner

(57) **Abstract**

A method and apparatus are disclosed for supporting D2D discovery in a wireless communication system. The method includes an application in the UE activates a D2D discovery function (510). The method also includes the UE sends a first signaling to inform an eNB that the D2D discovery function has been activated (520). The method further includes the application in the UE deactivates the D2D discovery function (525). In addition, the method includes the UE sends a second signaling to inform the eNB that the D2D discovery function has been deactivated (535).

## Description

### CROSS-REFERENCE TO RELATED APPLICATIONS

The present Application claims the benefit of U.S. Provisional Patent Application Serial No. 61/886,850 filed on October 4, 2013, the entire disclosure of which is incorporated herein by reference.

### FIELD

This disclosure generally relates to wireless communication networks, and more particularly, to a method and apparatus for supporting D2D (Device-To-Device) discovery in a wireless communication system.

### BACKGROUND

With the rapid rise in demand for communication of large amounts of data to and from mobile communication devices, traditional mobile voice communication networks are evolving into networks that communicate with Internet Protocol (IP) data packets. Such IP data packet communication can provide users of mobile communication devices with voice over IP, multimedia, multicast and on-demand communication services.

An exemplary network structure for which standardization is currently taking place is an Evolved Universal Terrestrial Radio Access Network (E-UTRAN). The E-UTRAN system can provide high data throughput in order to realize the above-noted voice over IP and multimedia services. The E-UTRAN system's standardization work is currently being performed by the 3GPP standards organization. Accordingly, changes to the current body of 3GPP standard are currently being submitted and considered to evolve and finalize the 3GPP standard.

### SUMMARY

Methods and apparatus are disclosed for supporting D2D (Device-To-Device) discovery in a wireless communication system and are defined in independent claims 1, 8, and 14, respectively. The respective dependent claims define preferred embodiments thereof, respectively. The method according to one aspect includes an application in the UE (User Equipment) activates a D2D discovery function. This method also includes the UE sends a first signaling to inform an eNB (evolved Node B) that the D2D discovery function has been activated. This method further includes the application in the UE deactivates the D2D discovery function. In addition, this method includes the UE sends a second signaling to inform the eNB that the D2D discovery function has been deactivated.

### BRIEF DESCRIPTION OF THE DRAWINGS

FIG. 1 shows a diagram of a wireless communication system according to one exemplary embodiment.
FIG. 2 is a block diagram of a transmitter system (also known as access network) and a receiver system (also known as user equipment or UE) according to one exemplary embodiment.
FIG. 3 is a functional block diagram of a communication system according to one exemplary embodiment.
FIG. 4 is a functional block diagram of the program code of FIG. 3 according to one exemplary embodiment.
FIG. 5 is a flow chart according to one exemplary embodiment.
FIG. 6 is a flow chart according to one exemplary embodiment.

### DETAILED DESCRIPTION

The exemplary wireless communication systems and devices described below employ a wireless communication system, supporting a broadcast service. Wireless communication systems are widely deployed to provide various types of communication such as voice, data, and so on. These systems may be based on code division multiple access (CDMA), time division multiple access (TDMA), orthogonal frequency division multiple access (OFDMA), 3GPP LTE (Long Term Evolution) wireless access, 3GPP LTE-A or LTE-Advanced (Long Term Evolution Advanced), 3GPP2 UMB (Ultra Mobile Broadband), WiMax, or some other modulation techniques.

In particular, the exemplary wireless communication systems devices described below may be designed to support one or more standards such as the standard offered by a consortium named "3rd Generation Partnership Project" referred to herein as 3GPP, including Document Nos. TS36.321 V11.3.0, "E-UTRA MAC protocol specification"; SP-110638, "WID on Proposal for a study on Proximity-based Services"; TR22.803-c20, "Feasibility Study for Proximity Services (ProSe)"; R1-132503, "Techniques for D2D Discovery"; R2-132526, "Resource Configuration & Selection for D2D Direct Discovery"; R2-133215, "UE state for D2D Direct Discovery"; R2-133382, "Discussion on idle mode UE Discovery"; and R2-133482, "D2D Discovery". The standards and documents listed above are hereby expressly incorporated by reference in their entirety.

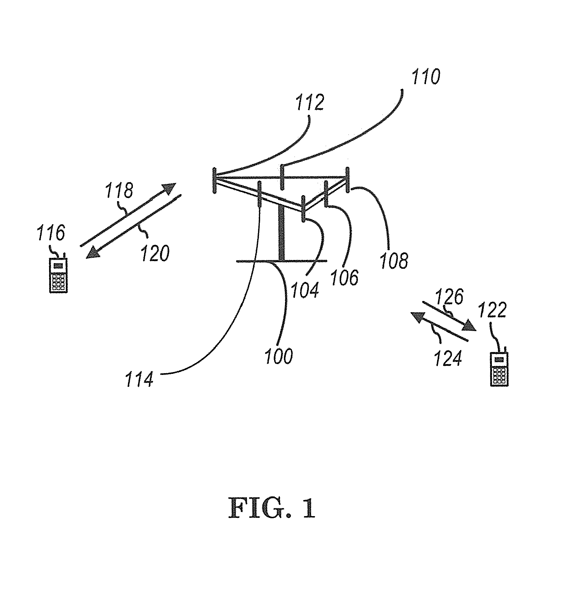

FIG. 1 shows a multiple access wireless communication system according to one embodiment of the invention. An access network 100 (AN) includes multiple antenna groups, one including 104 and 106, another including 108 and 110, and an additional including 112 and 114. In FIG. 1, only two antennas are shown for each antenna group, however, more or fewer antennas may be utilized for each antenna group. Access terminal 116 (AT) is in communication with antennas 112 and 114, where antennas 112 and 114 transmit information to access terminal 116 over forward link 120 and receive information from access terminal 116 over reverse link 118. Access terminal (AT) 122 is in communication with antennas 106 and 108, where antennas 106 and 108 transmit information to access terminal (AT) 122 over forward link 126 and receive information from access terminal (AT) 122 over reverse link 124. In a FDD system, communication links 118, 120, 124 and 126 may use different frequency for communication. For example, forward link 120 may use a different frequency then that used by reverse link 118.

Each group of antennas and/or the area in which they are designed to communicate is often referred to as a sector of the access network. In the embodiment, antenna groups each are designed to communicate to access terminals in a sector of the areas covered by access network 100.

In communication over forward links 120 and 126, the transmitting antennas of access network 100 may utilize beamforming in order to improve the signal-to-noise ratio of forward links for the different access terminals 116 and 122. Also, an access network using beamforming to transmit to access terminals scattered randomly through its coverage causes less interference to access terminals in neighboring cells than an access network transmitting through a single antenna to all its access terminals.

An access network (AN) may be a fixed station or base station used for communicating with the terminals and may also be referred to as an access point, a Node B, a base station, an enhanced base station, an evolved Node B (eNB), or some other terminology. An access terminal (AT) may also be called user equipment (UE), a wireless communication device, terminal, access terminal or some other terminology.

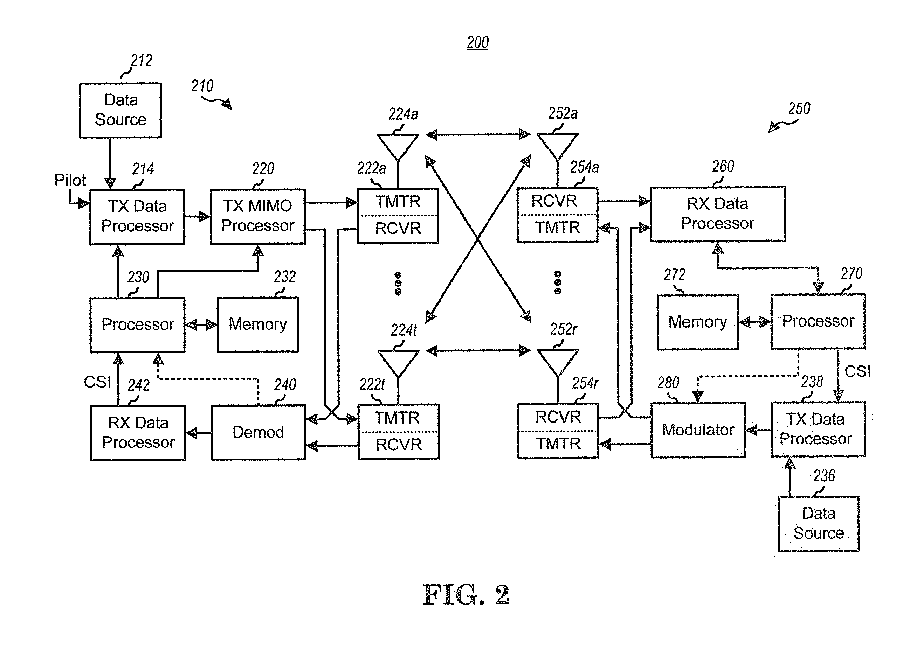

FIG. 2 is a simplified block diagram of an embodiment of a transmitter system 210 (also known as the access network) and a receiver system 250 (also known as access terminal (AT) or user equipment (UE)) in a MIMO system 200. At the transmitter system 210, traffic data for a number of data streams is provided from a data source 212 to a transmit (TX) data processor 214.

In one embodiment, each data stream is transmitted over a respective transmit antenna. TX data processor 214 formats, codes, and interleaves the traffic data for each data stream based on a particular coding scheme selected for that data stream to provide coded data.

The coded data for each data stream may be multiplexed with pilot data using OFDM techniques. The pilot data is typically a known data pattern that is processed in a known manner and may be used at the receiver system to estimate the channel response. The multiplexed pilot and coded data for each data stream is then modulated (i.e., symbol mapped) based on a particular modulation scheme (e.g., BPSK, QPSK, M-PSK, or M-QAM) selected for that data stream to provide modulation symbols. The data rate, coding, and modulation for each data stream may be determined by instructions performed by processor 230.

The modulation symbols for all data streams are then provided to a TX MIMO processor 220, which may further process the modulation symbols (e.g., for OFDM). TX MIMO processor 220 then provides *N_{T}* modulation symbol streams to *N_{T}* transmitters (TMTR) 222a through 222t. In certain embodiments, TX MIMO processor 220 applies beamforming weights to the symbols of the data streams and to the antenna from which the symbol is being transmitted.

Each transmitter 222 receives and processes a respective symbol stream to provide one or more analog signals, and further conditions (e.g., amplifies, filters, and upconverts) the analog signals to provide a modulated signal suitable for transmission over the MIMO channel. *N_{T}* modulated signals from transmitters 222a through 222t are then transmitted from *N_{T}* antennas 224a through 224t, respectively.

At receiver system 250, the transmitted modulated signals are received by *N_{R}* antennas 252a through 252r and the received signal from each antenna 252 is provided to a respective receiver (RCVR) 254a through 254r. Each receiver 254 conditions (e.g., filters, amplifies, and downconverts) a respective received signal, digitizes the conditioned signal to provide samples, and further processes the samples to provide a corresponding "received" symbol stream.

An RX data processor 260 then receives and processes the *N_{R}* received symbol streams from *N_{R}* receivers 254 based on a particular receiver processing technique to provide *N_{T}* "detected" symbol streams. The RX data processor 260 then demodulates, deinterleaves, and decodes each detected symbol stream to recover the traffic data for the data stream. The processing by RX data processor 260 is complementary to that performed by TX MIMO processor 220 and TX data processor 214 at transmitter system 210.

A processor 270 periodically determines which pre-coding matrix to use (discussed below). Processor 270 formulates a reverse link message comprising a matrix index portion and a rank value portion.

The reverse link message may comprise various types of information regarding the communication link and/or the received data stream. The reverse link message is then processed by a TX data processor 238, which also receives traffic data for a number of data streams from a data source 236, modulated by a modulator 280, conditioned by transmitters 254a through 254r, and transmitted back to transmitter system 210.

At transmitter system 210, the modulated signals from receiver system 250 are received by antennas 224, conditioned by receivers 222, demodulated by a demodulator 240, and processed by a RX data processor 242 to extract the reserve link message transmitted by the receiver system 250. Processor 230 then determines which pre-coding matrix to use for determining the beamforming weights then processes the extracted message.

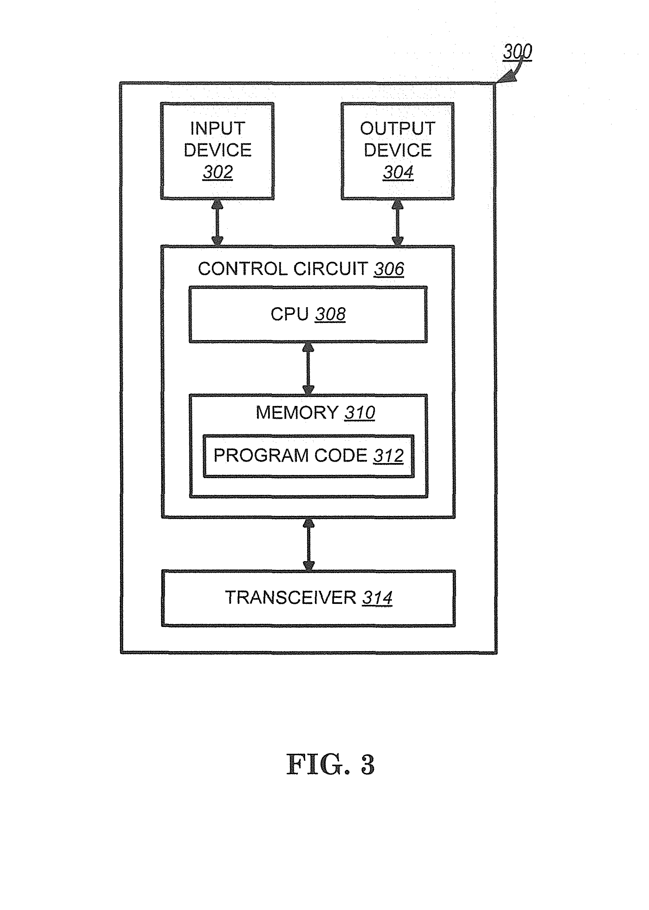

Turning to FIG. 3, this figure shows an alternative simplified functional block diagram of a communication device according to one embodiment of the invention. As shown in FIG. 3, the communication device 300 in a wireless communication system can be utilized for realizing the UEs (or ATs) 116 and 122 in FIG. 1, and the wireless communications system is preferably the LTE system. The communication device 300 may include an input device 302, an output device 304, a control circuit 306, a central processing unit (CPU) 308, a memory 310, a program code 312, and a transceiver 314. The control circuit 306 executes the program code 312 in the memory 310 through the CPU 308, thereby controlling an operation of the communications device 300. The communications device 300 can receive signals input by a user through the input device 302, such as a keyboard or keypad, and can output images and sounds through the output device 304, such as a monitor or speakers. The transceiver 314 is used to receive and transmit wireless signals, delivering received signals to the control circuit 306, and outputting signals generated by the control circuit 306 wirelessly.

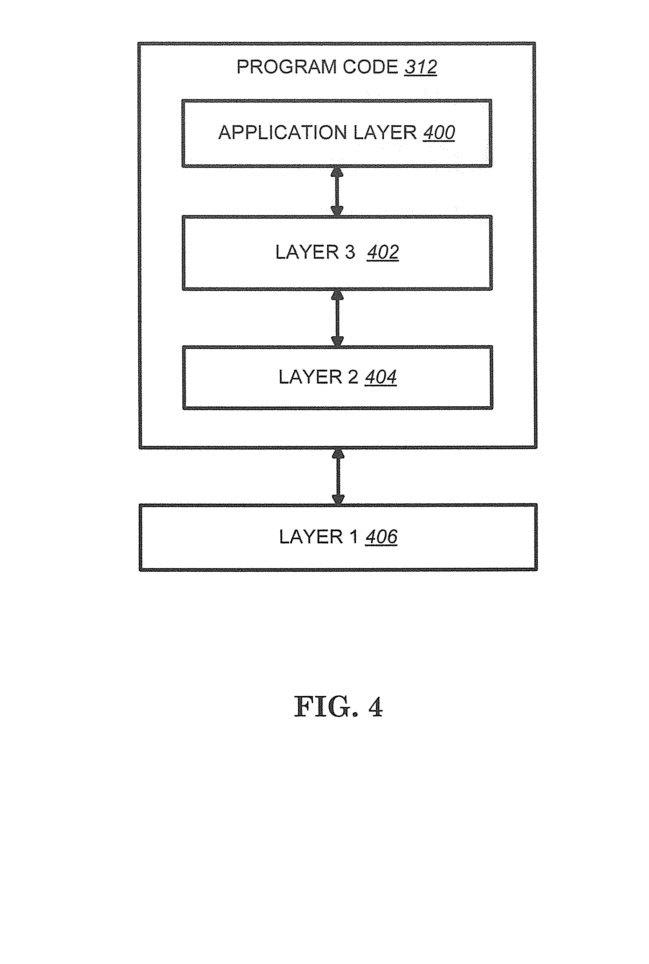

FIG. 4 is a simplified block diagram of the program code 312 shown in FIG. 3 in accordance with one embodiment of the invention. In this embodiment, the program code 312 includes an application layer 400, a Layer 3 portion 402, and a Layer 2 portion 404, and is coupled to a Layer 1 portion 406. The Layer 3 portion 402 generally performs radio resource control. The Layer 2 portion 404 generally performs link control. The Layer 1 portion 406 generally performs physical connections.

3GPP SP-110638 proposes a new study item on proximity-based services (ProSe). The justification and objective of this study item are described in 3GPP SP-110638 as follows:

### 3 Justification

Proximity-based applications and services represent a recent and enormous socio-technological trend. The principle of these applications is to discover instances of the applications running in devices that are within proximity of each other, and ultimately also exchange application-related data. In parallel, there is interest in proximity-based discovery and communications in the public safety community.

Current 3GPP specification are only partially suited for such needs, since all such traffic and signalling would have to be routed in the network, thus impacting their performance and adding un-necessary load in the network. These current limitations are also an obstacle to the creation of even more advanced proximity-based applications.

In this context, 3GPP technology, has the opportunity to become the platform of choice to enable proximity-based discovery and communication between devices, and promote a vast array of future and more advanced proximity-based applications.

### 4 Objective

The objective is to study use cases and identify potential requirements for an operator network controlled discovery and communications between devices that are in proximity, under continuous network control, and are under a 3GPP network coverage, for:
1. Commercial/social use
2. Network offloading
3. Public Safety
4. Integration of current infrastructure services, to assure the consistency of the user experience including reachability and mobility aspects
   Additionally, the study item will study use cases and identify potential requirements for
5. Public Safety, in case of absence of EUTRAN coverage (subject to regional regulation and operator policy, and limited to specific public-safety designated frequency bands and terminals)

Use cases and service requirements will be studied including network operator control, authentication, authorization, accounting and regulatory aspects.

The study does not apply to GERAN or UTRAN.

3GPP TR22.803-c20 defines a ProSe discovery, which contains an open [ProSe] discovery and a restricted [ProSe] discovery as follows:

### 3.1 Definitions

ProSe Discovery: a process that identifies that a UE is in proximity of another, using E-UTRA.

Open [ProSe] Discovery: is ProSe Discovery without explicit permission from the UE being discovered.

Restricted [ProSe] Discovery: is ProSe Discovery that only takes place with explicit permission from the UE being discovered.

In RAN1#73 meeting, the following working assumptions were concluded:
- It is assumed that D2D operates in UL spectrum (in case of FDD) or UL subframes of the cell giving coverage (in case of TDD except when out of coverage)
   o Use of DL subframes in case of TDD can be studied further
- It is assumed that D2D transmission/reception does not use full duplex on a given carrier

It is noted that D2D stands for Device to Device and ProSe discovery is also called D2D discovery.

R1-132503 discusses radio resources for D2D discovery and interactions between D2D discovery and wide area network (WAN) communication as quoted below:

### 3.1 Reserving Resources for Discovery

We propose that network reserve periodic resources in uplink sub-frames for discovery (*Design Principles 2, 3 & 4*). The uplink sub-frames with resources reserved for discovery should be mostly contiguous. The contiguous allocation helps reduce power consumption of discovery. This is illustrated with an example in Figure 3 below where 64 contiguous uplink sub-frames have resources reserved for discovery every 10 seconds.

### [Figure 3 in Section 3.1 has been omitted]

We call the period with which resources are reserved a "discovery period" and sub-frames with resources reserved for discovery "discovery sub-frames".

A UE participating in discovery will select a discovery resource among the sub-frames with resources reserved for discovery. The exact definition of a discovery resource is discussed later. The UE will transmit its discovery signal on its selected discovery resource every discovery period. The UE will also listen for discovery signals of other UEs on other discovery sub-frames (*Design Principles 2 & 4*)*.*

Network can inform UEs of discovery sub-frames via a SIB broadcast. Such allocation can be done in a deployment wide manner in a synchronous deployment. This enables inter-cell discovery in a power efficient manner. In an asynchronous deployment, the allocation can be done on a per cell basis. The eNodeB of a cell can broadcast its allocation along with its neighbouring cells allocation in the SIB. Here UEs need to listen for discovery signals of UEs camped in different cells.
***Proposal 1:** Network reserves periodically occurring uplink sub-frames that will be used for discovery.*

### 3.5 Coexistence with WAN Communication

To enable harmonious coexistence between WAN and discovery, the eNodeB should not schedule any new PUSCH transmission on discovery sub-frames. Any on-going HARQ transmissions can be suspended by the eNodeB and can be reactivated on non discovery sub-frames.
Note that since discovery sub-frames is a small fraction of uplink sub-frames (*Design Principle 8*) (0.64% in Figure 2) the impact of discovery on WAN will be minimal.

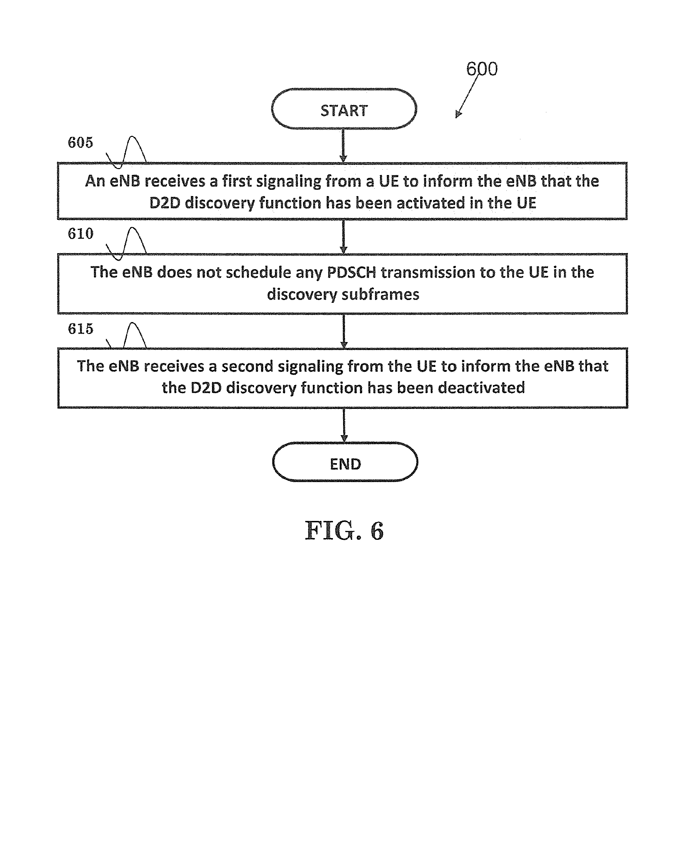

To further enable more harmonious coexistence, the discovery sub-frame allocation can be made non-contiguous. This is illustrated in Figure 6.

### [Figure 6 in Section 3.5 has been omitted]

Here discovery sub-frames are interspersed by WAN uplink sub-frames every 5 sub-frames. Such interspersing of sub-frames can be used to minimize the disruption to low delay traffic (such as voice) which is scheduled in a semi-persistent manner.

Note interspersing discovery sub-frames with uplink sub-frames can lead to higher power consumption for UEs participating in discovery. So discovery sub-frames should be interspersed by only a small number of uplink sub-frames.
***Proposal 9:** Interleave discovery sub-frames with small number of uplink sub-frames.*

R2-132526 discusses issues similar to R1-132503 and puts forth the following proposals.
- Proposal 1: The requirements/observations mentioned in this section 2.3.1 should be considered for discovery resource configuration
- Proposal 2: Periodic Allocation of Common Discovery Resources (i.e. Discovery sub frames)
- Proposal 3: Broadcasting the Discovery Resource Configuration (i.e. Discovery resource cycle and discovery resource interval) using SI message
- Proposal 4: Discovery sub frames should be staggered in the discovery resource interval to minimize the impact to latency sensitive traffic and UL HARQ operation of legacy UEs
- Proposal 5: The pattern of discovery and non discovery subframes in discovery resource interval should be discussed
- Proposal 6: The need for updating the discovery resource configuration and method to signal the updated discovery resource configuration should be discussed
- Proposal 7: Both contention based resource selection and dedicated resource assignment should be considered for transmitting discovery information
- Proposal 8: D2D-enabled UE monitoring the discovery information should monitors all the discovery resources configured for D2D direct discovery.

Furthermore, it was proposed in R2-133215, R2-133382, and R2-133482 that a UE should support D2D discovery irrespective of its current RRC (Radio Resource Control) state. The implication is that there is no need for a UE in RRC idle mode to enter RRC connected mode for transmitting or receiving D2D discovery signals.

TS36.321 defines Active Time and PDCCH (Physical Downlink Control Channel) subframe for DRX (Discontinuous Reception) operation as follows:

### 3.1 Definitions

**Active Time:** Time related to DRX operation, as defined in subclause 5.7, during which the UE monitors the PDCCH in PDCCH-subframes.

**PDCCH-subframe:** Refers to a subframe with PDCCH. For FDD UE operation, this represents any subframe; for TDD UE operation, if UE is capable of simultaneous reception and transmission in the aggregated cells, this represents the union of downlink subframes and subframes including DwPTS of all serving cells, except serving cells that are configured with *schedulingCellld* [8]; otherwise, this represents the subframes where the PCell is configured as a downlink subframe or a subframe including DwPTS.

### 5.7 Discontinuous Reception (DRX)

The UE may be configured by RRC with a DRX functionality that controls the UE's PDCCH monitoring activity for the UE's C-RNTI, TPC-PUCCH-RNTI, TPC-PUSCH-RNTI and Semi-Persistent Scheduling C-RNTI (if configured). When in RRC_CONNECTED, if DRX is configured, the UE is allowed to monitor the PDCCH discontinuously using the DRX operation specified in this subclause; otherwise the UE monitors the PDCCH continuously. When using DRX operation, the UE shall also monitor PDCCH according to requirements found in other subclauses of this specification. RRC controls DRX operation by configuring the timers *onDurationTimer, drx-InactivityTimer, drx-RetransmissionTimer* (one per DL HARQ process except for the broadcast process), the *longDRX-Cycle,* the value of the *drxStartOffset* and optionally the *drxShortCycleTimer* and *shortDRX-Cycle.* A HARQ RTT timer per DL HARQ process (except for the broadcast process) is also defined (see subclause 7.7).

When a DRX cycle is configured, the Active Time includes the time while:
- *onDurationTimer* or *drx-InactivityTimer* or *drx-RetransmissionTimer* or *mac-ContentionResolutionTimer* (as described in subclause 5.1.5) is running; or
- a Scheduling Request is sent on PUCCH and is pending (as described in subclause 5.4.4); or
- an uplink grant for a pending HARQ retransmission can occur and there is data in the corresponding HARQ buffer; or
- a PDCCH indicating a new transmission addressed to the C-RNTI of the UE has not been received after successful reception of a Random Access Response for the preamble not selected by the UE (as described in subclause 5.1.4).

When DRX is configured, the UE shall for each subframe:
- if a HARQ RTT Timer expires in this subframe and the data of the corresponding HARQ process was not successfully decoded:
   - start the *drx-RetransmissionTimer* for the corresponding HARQ process.
- if a DRX Command MAC control element is received:
   - stop *onDurationTimer;*
   - stop *drx-InactivityTimer.*
- if *drx-InactivityTimer* expires or a DRX Command MAC control element is received in this subframe:
   - if the Short DRX cycle is configured:
      - start or restart *drxShortCycleTimer;*
      - use the Short DRX Cycle.
   - else:
      - use the Long DRX cycle.
- if *drxShortCycleTimer* expires in this subframe:
   - use the Long DRX cycle.
- If the Short DRX Cycle is used and [(SFN * 10) + subframe number] modulo (*shortDRX-Cycle*) = (*drxStartOffset*) modulo (*shortDRX-Cycle*); or - if the Long DRX Cycle is used and [(SFN * 10) + subframe number] modulo (*longDRX-Cycle*) *= drxStartOffset:*
   - start *onDurationTimer.*
- during the Active Time, for a PDCCH-subframe, if the subframe is not required for uplink transmission for half-duplex FDD UE operation and if the subframe is not part of a configured measurement gap:
   - monitor the PDCCH;
   - if the PDCCH indicates a DL transmission or if a DL assignment has been configured for this subframe:
      - start the HARQ RTT Timer for the corresponding HARQ process;
      - stop the *drx-RetransmissionTimer* for the corresponding HARQ process.
   - if the PDCCH indicates a new transmission (DL or UL):
      - start or restart *drx-InactivityTimer.*
- in current subframe n, if the UE would not be in Active Time considering grants/assignments/DRX Command MAC control elements received and Scheduling Request sent until and including subframe n-5 when evaluating all DRX Active Time conditions as specified in this subclause, type-0-triggered SRS [2] shall not be reported.
- if CQI masking (*cqi-Mask*) is setup by upper layers:
   - in current subframe n, if *onDurationTimer* would not be running considering grants/assignments/DRX Command MAC control elements received until and including subframe n-5 when evaluating all DRX Active Time conditions as specified in this subclause, CQI/PMI/RI/PTI on PUCCH shall not be reported.
- else:
   - in current subframe n, if the UE would not be in Active Time considering grants/assignments/DRX Command MAC control elements received and Scheduling Request sent until and including subframe n-5 when evaluating all DRX Active Time conditions as specified in this subclause, CQI/PMI/RI/PTI on PUCCH shall not be reported.

Regardless of whether the UE is monitoring PDCCH or not, the UE receives and transmits HARQ feedback and transmits type-1-triggered SRS [2] when such is expected.

NOTE: The same active time applies to all activated serving cell(s).

NOTE: In case of downlink spatial multiplexing, if a TB is received while the HARQ RTT Timer is running and the previous transmission of the same TB was received at least N subframes before the current subframe (where N corresponds to the HARQ RTT Timer), the UE should process it and restart the HARQ RTT Timer.

RAN1 agreed to use UL (Uplink) spectrum for D2D operations in FDD (Frequency Division Duplex). In general, R1-132503 proposes that network reserves periodically occurring uplink subframes for D2D discovery. R1-132503 also proposes to interleave discovery subframes with small number of uplink subframes for minimizing the impact to low latency traffic (such as voice service). Furthermore, to enable harmonious coexistence between WAN and D2D discovery, R1-132503 suggests that the eNodeB should not schedule any PUSCH (Physical Uplink Shared Channel) transmission in discovery subframes to avoid interferences between D2D discovery signals and PUSCH transmissions.

Similar proposals for D2D discovery resources are also set forth in R2-132526. Furthermore, R2-132526 proposes to broadcast the D2D discovery resource configuration in system information of a cell. In general, R1-132503 and R2-132526 mainly discuss D2D impacts on WAN uplink transmissions. D2D impacts on WAN downlink transmissions are analyzed and the potential solutions are proposed below.

In general, if a UE is only capable of receiving a single transmission or has no extra RF (Radio Frequency) front end for receiving D2D discovery signals, the UE would not be able to receive both PDSCH (Physical Downlink Shared Channel) transmission (in DL (Downlink) spectrum) and D2D discovery signal (in UL spectrum) simultaneously. To avoid this situation, the eNB could prevent scheduling any new DL transmission in discovery subframes to all UEs for UL transmissions. However, this solution seems to be an overkill because not all UEs would be engaging in D2D discovery and there is no such concern for a UE that is not engaging in D2D discovery.

Therefore, according to the invention, it would be beneficial for a D2D-capable UE to inform eNB of its D2D discovery status so that eNB can avoid scheduling DL transmissions to the UE in discovery subframes if the UE is engaging in D2D discovery. More specifically, the UE would send a signaling to inform eNB that a D2D discovery function has been activated in the UE. Furthermore, the UE would send another signaling to inform eNB when the D2D discovery function has been deactivated.

In one preferred embodiment according to the invention, the UE would start monitoring the D2D discovery signals in discovery subframes after the D2D discovery function has been activated, and would stop monitoring the D2D discovery signals after the D2D discovery function has been deactivated. In another preferrd embodiment according to the invention, which might be combined with the one preferred embodiment according to the invention, the UE would monitor the D2D discovery signal(s) in a discovery subframe if the discovery subframe collides with a subframe within Active Time, wherein the Active Time is time related to DRX operation, during which the UE monitors the PDCCH in the PDCCH-subframes.

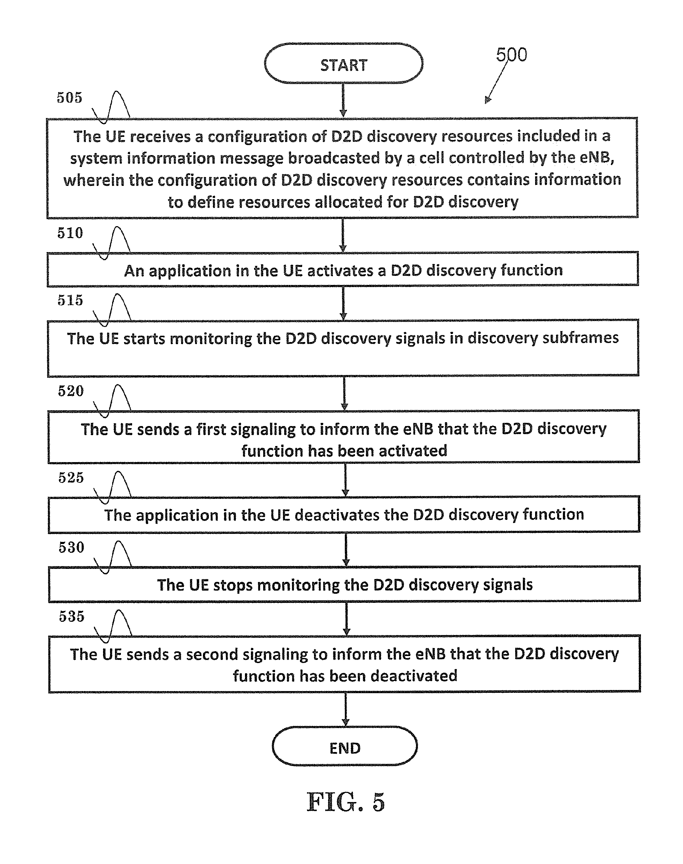

FIG. 5 is a flow chart 500 in accordance with one first exemplary embodiment according to the invention. Preferably, as shown in step 505, the UE receives a configuration of D2D discovery resources included in a system information message broadcasted by a cell controlled by the eNB, wherein the configuration of D2D discovery resources contains information to define resources allocated for D2D discovery. Further preferably, the D2D discovery resources are allocated in uplink spectrum.

In step 510, an application in the UE activates a D2D discovery function. Thereafter, preferably, as shown in step 515, the UE starts monitoring the D2D discovery signals in discovery subframes. Further preferably, the discovery subframes occur periodically.

In step 520, the UE sends a first signaling to inform an eNB that the D2D discovery function has been activated. In step 525, the application in the UE deactivates the D2D discovery function.

Thereafter, preferably, as shown in step 530, the UE stops monitoring the D2D discovery signals. In step 535, the UE sends a second signaling to inform the eNB that the D2D discovery function has been deactivated. Preferably, the UE could be in RRC connected mode.

Preferably, the UE monitors the D2D discovery signals in the discovery subframes if the discovery subframes collide with subframes during Active Time, wherein the Active Time is time related to DRX operation, during which the UE monitors a PDCCH in PDCCH-subframes.

Referring back to FIGS. 3 and 4, the device 300 includes a program code 312 stored in memory 310. In one embodiment thereof, the CPU 308 could execute program code 312 to (i) enable an application in the UE to activate a D2D discovery function, (ii) enable a UE to send a first signaling to inform an eNB that the D2D discovery function has been activated, (iii) enable the application in the UE to deactivate the D2D discovery function, and (iv) enable the UE to send a second signaling to inform the eNB that the D2D discovery function has been deactivated. In addition, the CPU 308 can execute the program code 312 to perform all of the above-described actions and steps or others described herein, in particular those described in paragraphs [0041] to [0047] above.

FIG. 6 is a flow chart 600 in accordance with one second exemplary embodiment according to the invention. In step 605, an eNB receives a first signaling from a UE to inform the eNB that the D2D discovery function has been activated in the UE. Preferably, as shown in step 610, the eNB does not schedule any PDSCH transmission to the UE in discovery subframes. Furthermore, further preferably the discovery subframes occur periodically for transmission and reception of D2D discovery signals. In step 615, the eNB receives a second signaling from the UE to inform the eNB that the D2D discovery function has been deactivated.

Furthermore, preferably, a cell controlled by the eNB broadcasts a configuration of D2D discovery resources in a system information message, wherein the configuration of D2D discovery resources contains information to define resources allocated for D2D discovery. Preferably, the D2D discovery resources could be allocated in uplink spectrum. Alternatively or additionally, preferably, the D2D discovery resources configuration indicates the discovery subframes which occur periodically for transmission and reception of D2D discovery signals.

Referring back to FIGS. 3 and 4, the device 300 includes a program code 312 stored in memory 310. In one embodiment thereof, the CPU 308 could execute program code 312 to enable the eNB (i) to receive a first signaling from a UE to inform the eNB that the D2D discovery function has been activated in the UE, and (ii) to receive a second signaling from the UE to inform the eNB that the D2D discovery function has been deactivated. In one embodiment, the eNB does not schedule any PDSCH transmission in the discovery subframes.

In addition, the CPU 308 can execute the program code 312 to perform all of the above-described actions and steps or others described herein, in particular those described in paragraphs [0049] and [0050] above.

Various aspects of the disclosure have been described above. It should be apparent that the teachings herein may be embodied in a wide variety of forms and that any specific structure, function, or both being disclosed herein is merely representative. Based on the teachings herein one skilled in the art should appreciate that an aspect disclosed herein may be implemented independently of any other aspects and that two or more of these aspects may be combined in various ways. For example, an apparatus may be implemented or a method may be practiced using any number of the aspects set forth herein. In addition, such an apparatus may be implemented or such a method may be practiced using other structure, functionality, or structure and functionality in addition to or other than one or more of the aspects set forth herein. As an example of some of the above concepts, in some aspects concurrent channels may be established based on pulse repetition frequencies. In some aspects concurrent channels may be established based on pulse position or offsets. In some aspects concurrent channels may be established based on time hopping sequences. In some aspects concurrent channels may be established based on pulse repetition frequencies, pulse positions or offsets, and time hopping sequences.

Those of skill in the art would understand that information and signals may be represented using any of a variety of different technologies and techniques. For example, data, instructions, commands, information, signals, bits, symbols, and chips that may be referenced throughout the above description may be represented by voltages, currents, electromagnetic waves, magnetic fields or particles, optical fields or particles, or any combination thereof.

Those of skill would further appreciate that the various illustrative logical blocks, modules, processors, means, circuits, and algorithm steps described in connection with the aspects disclosed herein may be implemented as electronic hardware (e.g., a digital implementation, an analog implementation, or a combination of the two, which may be designed using source coding or some other technique), various forms of program or design code incorporating instructions (which may be referred to herein, for convenience, as "software" or a "software module"), or combinations of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present disclosure.

In addition, the various illustrative logical blocks, modules, and circuits described in connection with the aspects disclosed herein may be implemented within or performed by an integrated circuit ("IC"), an access terminal, or an access point. The IC may comprise a general purpose processor, a digital signal processor (DSP), an application specific integrated circuit (ASIC), a field programmable gate array (FPGA) or other programmable logic device, discrete gate or transistor logic, discrete hardware components, electrical components, optical components, mechanical components, or any combination thereof designed to perform the functions described herein, and may execute codes or instructions that reside within the IC, outside of the IC, or both. A general purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

It is understood that any specific order or hierarchy of steps in any disclosed process is an example of a sample approach. Based upon design preferences, it is understood that the specific order or hierarchy of steps in the processes may be rearranged while remaining within the scope of the present disclosure. The accompanying method claims present elements of the various steps in a sample order, and are not meant to be limited to the specific order or hierarchy presented.

The steps of a method or algorithm described in connection with the aspects disclosed herein may be embodied directly in hardware, in a software module executed by a processor, or in a combination of the two. A software module (e.g., including executable instructions and related data) and other data may reside in a data memory such as RAM memory, flash memory, ROM memory, EPROM memory, EEPROM memory, registers, a hard disk, a removable disk, a CD-ROM, or any other form of computer-readable storage medium known in the art. A sample storage medium may be coupled to a machine such as, for example, a computer/processor (which may be referred to herein, for convenience, as a "processor") such the processor can read information (e.g., code) from and write information to the storage medium. A sample storage medium may be integral to the processor. The processor and the storage medium may reside in an ASIC. The ASIC may reside in user equipment. In the alternative, the processor and the storage medium may reside as discrete components in user equipment. Moreover, in some aspects any suitable computer-program product may comprise a computer-readable medium comprising codes relating to one or more of the aspects of the disclosure. In some aspects a computer program product may comprise packaging materials.

While the invention has been described in connection with various aspects, it will be understood that the invention is capable of further modifications. This application is intended to cover any variations, uses or adaptation of the invention following, in general, the principles of the invention, and including such departures from the present disclosure as come within the known and customary practice within the art to which the invention pertains.

## Claims

1. A method for supporting device to device, in the following also referred to as D2D, discovery, wherein a User Equipment, in the following also referred to as UE, is capable of D2D discovery, comprising:
an application in the UE activates a D2D discovery function (510);
the UE sends a first signaling to inform an evolved Node B, in the following also referred to as eNB, that the D2D discovery function has been activated (520);
the application in the UE deactivates the D2D discovery function (525); and
the UE sends a second signaling to inform the eNB that the D2D discovery function has been deactivated (535).

2. The method of claim 1, further comprising:
the UE starts monitoring D2D discovery signals in discovery subframes (515) after the D2D discovery function has been activated in the UE, and stops monitoring the D2D discovery signals (530) after the D2D discovery function has been deactivated.

3. The method of claim 2, wherein the discovery subframes occur periodically.

4. The method of claim 2 or 3, further comprising:
the UE monitors the D2D discovery signals in the discovery subframes if the discovery subframes collide with subframes during Active Time, wherein the Active Time is time related to Discontinuous Reception, in the following also referred to as DRX, operation, during which the UE monitors a Physical Downlink Control Channel, in the following also referred to as PDCCH, in PDCCH-subframes.

5. The method of anyone of claims 1 to 4, further comprising:
the UE receives a configuration of D2D discovery resources included in a system information message broadcasted by a cell controlled by the eNB, wherein the configuration of D2D discovery resources contains information to define resources allocated for D2D discovery (505).

6. The method of claim 5, wherein the D2D discovery resources are allocated in uplink spectrum.

7. The method of anyone of claims 1 to 6, wherein the UE is in RRC connected mode.

8. A method for supporting device to device, in the following also referred to as D2D, discovery, comprising:
an evolved Node B, in the following also referred to as eNB, receives a first signaling from a User Equipment, in the following also referred to as UE, to inform the eNB that the D2D discovery function has been activated in the UE (605); and
the eNB receives a second signaling from the UE to inform the eNB that the D2D discovery function has been deactivated (615).

9. The method of claim 8, further comprising:
the eNB does not schedule any Physical Downlink Shared Channel, in the following also referred to as PDSCH, transmission to the UE in discovery subframes.

10. The method of claim 9, wherein the discovery subframes occur periodically for transmission and reception of D2D discovery signals.

11. The method of anyone of claims 8 to 10, further comprising:
a cell controlled by the eNB broadcasts a configuration of D2D discovery resources in a system information message, wherein the configuration of D2D discovery resources contains information to define resources allocated for D2D discovery.

12. The method of claim 11, wherein the D2D discovery resources are allocated in uplink spectrum.

13. The method of claim 11 or 12, wherein the configuration of D2D discovery resources indicates the discovery subframes which occur periodically for transmission and reception of D2D discovery signals.

14. A communication device (300) for supporting device to device, in the following also referred to as D2D, discovery, the communication device comprising:
a control circuit (306);
a processor (308) installed in the control circuit (306);
a memory (310) installed in the control circuit (306) and operatively coupled to the
processor (308);
wherein the processor (308) is configured to execute a program code (312) stored in the memory (310) to enable to perform the method steps as defined in anyone of claims 1 to 13.
